(19) Europäisches Patentamt
European Patent Office
Office européen des brevets

(11) **EP 4 080 798 A1**

(12) **EUROPÄISCHE PATENTANMELDUNG**

(43) Veröffentlichungstag:
**26.10.2022 Patentblatt 2022/43**

(21) Anmeldenummer: **21170130.5**

(22) Anmeldetag: **23.04.2021**

(51) Internationale Patentklassifikation (IPC):
*H04L 1/00* (2006.01)   *H04L 1/20* (2006.01)

(52) Gemeinsame Patentklassifikation (CPC):
**H04L 1/0076; H04L 1/20**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fraunhofer-Gesellschaft zur Förderung der angewandten Forschung e.V.
80686 München (DE)**

(72) Erfinder:
• **FROTZSCHER, Andreas
01069 Dresden (DE)**

• **ELLINGER, Hannes
01069 Dresden (DE)**
• **HAALA, Oliver
90411 Nürnberg (DE)**
• **HUPP, Jürgen
90411 Nürnberg (DE)**
• **BURKHARDT, Frank
91058 Erlangen (DE)**
• **SCHUH, Kirsten
91058 Erlangen (DE)**

(74) Vertreter: **Schairer, Oliver et al
Schoppe, Zimmermann, Stöckeler Zinkler, Schenk & Partner mbB Patentanwälte
Radlkoferstraße 2
81373 München (DE)**

(54) **VORRICHTUNG UND VERFAHREN ZUR INTRINSISCHEN ANALYSE DER VERBINDUNGSQUALITÄT IN FUNKNETZWERKEN MIT NETZWERK-CODIERTER KOOPERATION**

(57)     Eine Vorrichtung (100) zu einer Bestimmung einer Übertragungsqualität in einem Kommunikationsnetzwerk wird bereitgestellt. Eine erste Netzwerkeinheit (151) des Kommunikationsnetzwerks ist eingerichtet, eine erste Datenübertragung durchzuführen, indem von der ersten Netzwerkeinheit (151) zu versendende erste Daten so übertragen werden, dass ein erstes Datenpaket von den ersten Daten abhängt. Eine zweite Netzwerkeinheit (152) des Kommunikationsnetzwerks ist eingerichtet, eine zweite Datenübertragung durchzuführen, indem von der zweiten Netzwerkeinheit (152) zu versendende zweite Daten so übertragen werden, dass die zweiten Daten mit den ersten Daten in einem zweiten Datenpaket kombiniert sind. Die Vorrichtung (100) umfasst eine Empfangseinheit (110), die ausgebildet ist, die zweite Datenübertragung zu empfangen. Des Weiteren umfasst die Vorrichtung (100) eine Auswerteeinheit (120), die ausgebildet ist, eine erste Qualität der ersten Datenübertragung und/oder eine zweite Qualität der zweiten Datenübertragung zu bestimmen, indem die Auswerteeinheit (120) das zweite Datenpaket auswertet.

Fig. 1

**Beschreibung**

Die Anmeldung betrifft eine Vorrichtung und ein Verfahren zur intrinsischen Analyse der Verbindungsqualität in Funknetzwerken mit Netzwerk-codierter Kooperation.

An Funksysteme, insbesondere in industriellen Anwendungen mit schnellen Reaktionszeiten oder hohen Sicherheits- bzw. Verfügbarkeitsvorgaben werden hohe Anforderungen hinsichtlich Paketverlustrate, Datenrate oder Übertragungslatenz bei der bidirektionalen Übertragung gestellt. Beispiele, bei denen mit schneller Reaktionszeit und hoher Sicherheit Daten über ein Funksystem übertragen werden sollen, sind etwa Daten von Sensoren oder Aktoren in beweglichen Szenarien oder etwa Daten von (Motor-) Steuerungen.

Um ein deterministisches Zeitverhalten bei der Funkübertragung zu realisieren, werden üblicherweise Scheduling-Verfahren oder Zeitmultiplex-Verfahren (Time Division Multiple Access TDMA) eingesetzt. Im Falle einer fehlerfreien Übertragung führt dies zu einer deterministischen Übertragungslatenz bzw. Zykluszeit des Funksystems. Bei einer Störung der Übertragung müssen Maßnahmen ergriffen werden. Diese Maßnahmen dürfen die Zeitanforderungen für die Übertragung allerdings nicht verletzen, da äußere Steuerungssysteme ansonsten auf die Übertragungsstörung reagieren, beispielsweise mit einem Notbetrieb oder einer Abschaltung der Maschine.

Die Maßnahmen zur Steigerung der Robustheit erfolgen üblicherweise auf verschiedenen Wegen, beispielsweise durch eine Anpassung des eingesetzten Modulationsverfahrens, oder durch eine Anpassung der Kanalcodierung zur Verbesserung einer einzelnen Verbindung (engl. Link), oder durch ein Retransmissions- oder ARQ-/HARQ-Verfahren mit einer Paketwiederholung innerhalb der Zykluszeit, oder durch Antennendiversität, zur Ausnutzung mehrerer Übertragungspfade bei Mehrwegeausbreitung.

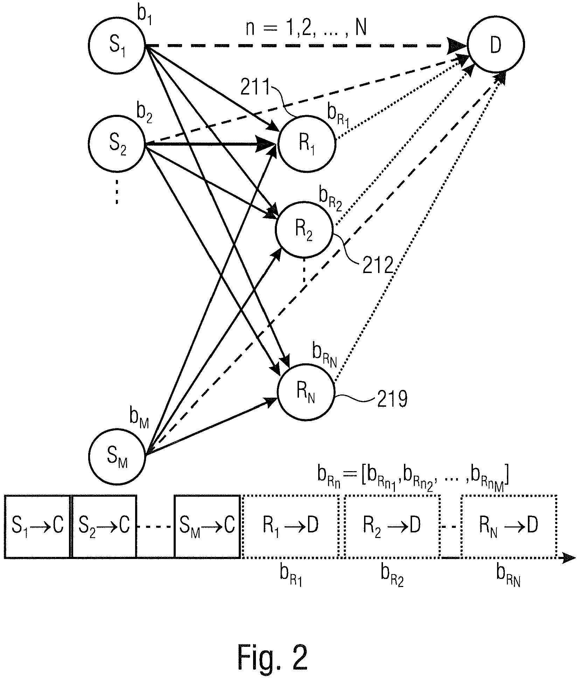

Eine weitere Maßnahme zur Steigerung der Robustheit besteht im Relaying und in kooperativen Verfahren (Cooperative Communication CC), wobei eine Weiterleitung von Paketen durch einen andere Funkknoten als weiterleitende Zwischenknoten 211, 212, 219 erfolgt (siehe Fig. 2). Über diese Zwischenknoten 211, 212, 219 ergibt sich ebenfalls Pfadredundanz. Diesbezüglich zeigt Fig. 2 ein Beispiel für kooperative Kommunikation (Cooperative Communication; Quelle: A Tutorial on Network Coding).

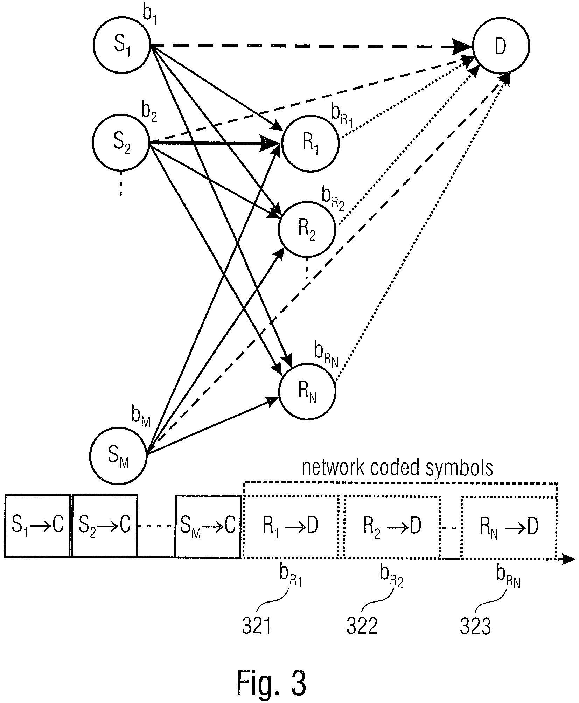

Netzwerk-codierte Kooperation (Network Coded Cooperation) stellt ebenfalls eine Maßnahme zur Steigerung der Robustheit dar. Dabei werden die weitergeleiteten Nachrichten in den Relay Knoten durch Methoden des Network Coding miteinander kombiniert und die kombinierten Nachrichten übertragen (siehe Fig. 3). So zeigt Fig. 3 ein Beispiel für Netzwerk-codierte Kooperation (Network Coded Cooperation; Quelle: A Tutorial on Network Coding) mit Netzwerk-codierten Symbolen 321, 322, 323.

Wenn über Kanalcodierung die Möglichkeiten auf einem Link ausgeschöpft sind, bieten CC und insbesondere NCC großes Potenzial, da dadurch die so genannte Diversity Order (Anzahl der Ausbreitungspfade) des Gesamtsystems vergrößert wird. Dabei ist entscheidend, welcher Knoten welche Pakete kombinieren (encodieren) und weiterschicken soll.

Dies kann entweder pseudo-zufällig (Random Linear Coding) oder deterministisch festgelegt werden. In beiden Fällen ist es vorteilhaft den Zustand der Verbindungen (engl. Link quality) zwischen den Knoten zu kennen, um die Codierung an den Netzwerkzustand anzupassen. Hierfür muss eine Analyse der Verbindungsqualität (engl. Link analysis) durchgeführt werden. Nachfolgend wird synonym auch der Begriff Linkanalyse verwendet.

Die Kenntnis über die Verbindungsqualität im Netzwerk ist insbesondere dann von Bedeutung, wenn die Übertragungen im Netzwerk sehr zuverlässig sein müssen, d.h. nur eine äußerst geringe Übertragungsfehlerrate aufweisen dürfen und gleichzeitig die Übertragungslatenzen sehr gering sein müssen.

Im Stand der Technik werden zur Analyse des Zustandes der verschiedenen Links in einem Funknetzwerk entweder zusätzliche Testpakete übertragen oder die übertragenen Daten- bzw. Management-Pakete genutzt. Auf Basis der empfangenen Pakete können die empfangenden Funkknoten die Verbindungsqualität zu den sendenden Funkknoten analysieren. Hierfür werden zumeist statistische Analysen über verschiedene technische Parameter wie beispielsweise die Empfangsleistung, Bitfehlerrate (BER), Paketfehlerraten (PER), Signal-Rausch Abstand (SNR bzw. SINR) und Metriken aus der Kanalimpulsantwort durchgeführt. Die Ergebnisse der statistischen Analysen werden zumeist mittels Aggregation, Komprimierung, Quantisierung oder Mapping auf ein Metrik nachverarbeitet. Das Ergebnis wird dann ereignisgesteuert oder regelmäßig zum Netzwerk-Management übertragen, entweder als separates Paket oder als Teil eines zu übertragenden Paketes. In jedem Fall werden für die Übertragung der Metriken der Verbindungsqualität zusätzliche Übertragungsressourcen genutzt, die für eine Nutzdatenübertragung nicht mehr zur Verfügung stehen.

WO 2014 159616 A2 zeigt ein Protokoll für Netzwerk Codierung vor, in dem sog. Hilfsknoten (engl. helper nodes) Verfahren des Random Linear Network Codings nutzen, um die Datenkommunikation zwischen verschiedenen Funkknoten zu unterstützten. Die Konfiguration der Netzwerk Codierung und der Übertragungszeitpunkt der damit encodierten Pakete durch die Hilfsknoten wird auf Basis von Informationen über den Zustand der Linkqualität der verschiedenen Links in dem Netzwerk ausgewählt. Dies bedeutet, dass die Information über die Verbindungszustände dem Netzwerkmanagement bekannt sein müssen. In WO2014 159616 A3 wird jedoch keine Methode zur Erhebung der Verbindungsqualität im Netzwerk beschrieben.

In US 8842599 B2 werden Relay-Knoten zur Datenübertragung in Downlink und Uplink zwischen einer Basisstation und Endgeräten (User Terminals) genutzt. Die Relay Knoten analysieren den Kommunikationsverkehr, den sie zwischen der Basisstation und den Endgeräte weiterleiten, berechnen daraus Informationen über die Verbindungsqualität und schicken diese Information an die Basisstation weiter. Die Basisstation verarbeitet diese Information und wählt auf deren Basis pro Gruppe von Endgeräten einen Relay Knoten aus, um Methoden der Netzwerk-Codierung auf den Datenverkehr zu bzw. von dieser Gruppe von Endgeräten anzuwenden.

US 2014 0222996 A1 zeigt einen Einsatz eines verteilten Monitorings in einem Netzwerk. Es werden an mehreren Punkten im Netzwerk verschiedene Leistungsparameter und Metriken erfasst, die den aktuellen Zustand der Verbindungen bzw. des Nachrichtenflusses im Netzwerk widerspiegeln. Die Monitoring Einheiten übermitteln ihre Analyseergebnisse an das Netzwerkmanagement. Diese Leistungsparameter bzw. Metriken werden hinsichtlich ihrer Relevanz im aktuellen Netzwerkzustand analysiert. Das Netzwerkmanagement wird darüber informiert, welche Leistungsparameter und Metriken derzeit relevant sind und informiert ihrerseits alle im Netzwerk verteilten Monitoring-Einheiten, nur noch die ausgewählten Leistungsparameter zu analysieren. Ziel ist es, durch Auswahl der zu analysierenden Leistungsparameter den Datenverkehr der Monitoring-Einheiten zum Netzwerkmanagement zu reduzieren.

In US 2014 0036696 A1 ist beschrieben, dass in einem Netzwerk die mobilen Endgeräte eine Linkanalyse ihrer Verbindungen durchführen und die Analyseergebnisse an einen Network Controller weiterleiten. Auf Basis dieser Informationen schickt der Network Controller eine Empfehlung an die Endgeräte, ob sie das zellulare Mobilfunknetz oder den Access Point eines vorhandene WLAN Netzes nutzen sollen.

Eine Vorrichtung nach Anspruch 1, ein Verfahren nach Anspruch 19 und ein Computerprogramm nach Anspruch 20 werden bereitgestellt.

Eine Vorrichtung zu einer Bestimmung einer Übertragungsqualität in einem Kommunikationsnetzwerk wird bereitgestellt. Eine erste Netzwerkeinheit des Kommunikationsnetzwerks ist eingerichtet, eine erste Datenübertragung durchzuführen, indem von der ersten Netzwerkeinheit zu versendende erste Daten so übertragen werden, dass ein erstes Datenpaket von den ersten Daten abhängt. Eine zweite Netzwerkeinheit des Kommunikationsnetzwerks ist eingerichtet, eine zweite Datenübertragung durchzuführen, indem von der zweiten Netzwerkeinheit zu versendende zweite Daten so übertragen werden, dass die zweiten Daten mit den ersten Daten in einem zweiten Datenpaket kombiniert sind. Die Vorrichtung umfasst eine Empfangseinheit, die ausgebildet ist, die zweite Datenübertragung zu empfangen. Des Weiteren umfasst die Vorrichtung eine Auswerteeinheit, die ausgebildet ist, eine erste Qualität der ersten Datenübertragung und/oder eine zweite Qualität der zweiten Datenübertragung zu bestimmen, indem die Auswerteeinheit das zweite Datenpaket auswertet.

Des Weiteren wird ein Verfahren zu einer Bestimmung einer Übertragungsqualität in einem Kommunikationsnetzwerk bereitgestellt. Eine erste Netzwerkeinheit des Kommunikationsnetzwerks führt eine erste Datenübertragung durch, indem von der ersten Netzwerkeinheit zu versendende erste Daten so übertragen werden, dass ein erstes Datenpaket von den ersten Daten abhängt. Eine zweite Netzwerkeinheit des Kommunikationsnetzwerks führt eine zweite Datenübertragung durch, indem von der zweiten Netzwerkeinheit zu versendende zweite Daten so übertragen werden, dass die zweiten Daten mit den ersten Daten in einem zweiten Datenpaket kombiniert sind. Die Vorrichtung umfasst eine Empfangseinheit, die die zweite Datenübertragung empfängt. Des Weiteren umfasst die Vorrichtung eine Auswerteeinheit, die eine erste Qualität der ersten Datenübertragung und/oder eine zweite Qualität der zweiten Datenübertragung bestimmt, indem die Auswerteeinheit das zweite Datenpaket auswertet.

Ferner wird ein Computerprogramm mit einem Programmcode zur Durchführung des Verfahrens gemäß einem Ausführungsbeispiel bereitgestellt.

Gemäß Ausführungsformen werden Konzepte bereitgestellt, mit dem ein bestimmter Funkknoten (z.B. die Basisstation) Kenntnis über die Übertragungsqualität von Verbindungen erhalten kann, an denen er nicht direkt beteiligt ist, d.h. weder Sendeknoten noch Empfangsknoten ist, als auch über Verbindungen an denen er direkt beteiligt ist. Diese Kenntnis erhält er allein aus der Analyse der Nutzdaten von empfangenen Funkpaketen.

In Ausführungsformen müssen weder zusätzlichen Funkpakete übertragen werden, noch muss ein Teil der Nutzdaten in den Paketen zur Übertragung von Informationen der Verbindungsqualität geopfert werden. Es wird somit kein zusätzlicher Netzwerkverkehr für die Übertragung der Verbindungsmetriken benötigt.

Spezielle Ausführungsformen der Erfindung finden sich in den abhängigen Ansprüchen.

Nachfolgend werden bevorzugte Ausführungsformen der Erfindung unter Bezugnahme auf die Zeichnungen beschrieben.

In den Zeichnungen ist dargestellt:

Fig. 1 zeigt eine Vorrichtung gemäß einem Ausführungsbeispiel in einem Kommunikationsnetzwerk, das des Weiteren eine erste Netzwerkeinheit, eine zweite Netzwerkeinheit und ggf. eine weitere, dritte Netzwerkeinheit umfasst.

Fig. 2 zeigt ein Beispiel für kooperative Kommunikation.

Fig. 3    zeigt ein Beispiel für Netzwerk-codierte Kooperation.

Fig. 4    zeigt ein Beispiel für ein vollvermaschtes Funknetzwerk, bei dem die Basisstation eine Verbindung mit allen Funkknoten hat und die Funkknoten auch untereinander in Verbindung stehen.

Fig. 5    zeigt eine beispielhafte Berechnung eines codierten Pakets anhand von zwei Source-Paketen.

Fig. 6    zeigt ein Beispiel für ein codiertes Paket mit vollständigem Header.

Fig. 7    zeigt eine beispielhafte Superframe Struktur mit Netzwerk-codierter Kooperation.

Fig. 8    zeigt eine Topologie eines Netzwerks mit einer Basisstation und drei Funkknoten.

Fig. 9    zeigt ein Beispiel für eine mögliche Superframestruktur mit Netzwerkcodierter Kooperation, wobei das Netzwerk eine Basisstation und drei Funkknoten aufweist.

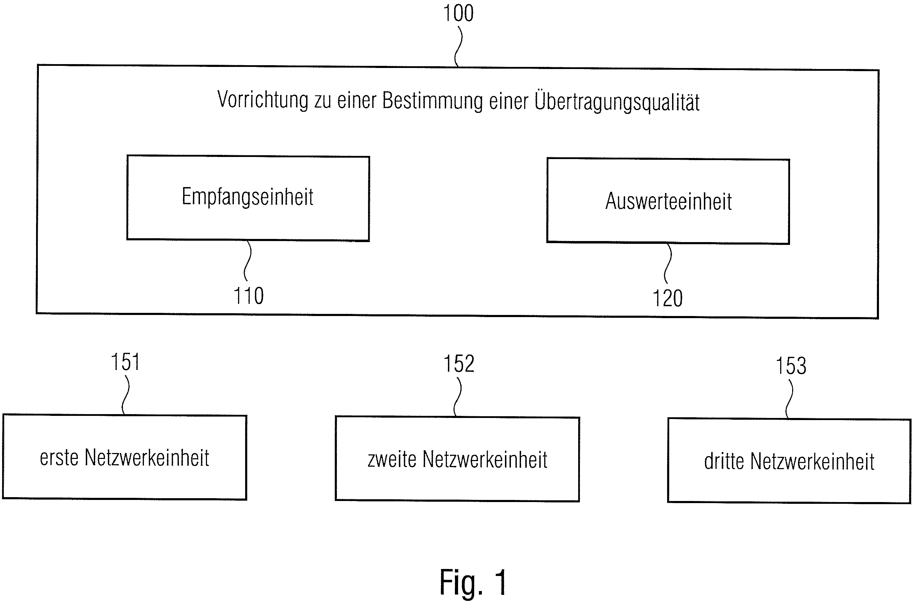

Fig. 1 zeigt eine Vorrichtung 100 gemäß einem Ausführungsbeispiel in einem Kommunikationsnetzwerk, das des Weiteren eine erste Netzwerkeinheit 151, eine zweite Netzwerkeinheit 152 und ggf. eine weitere, dritte Netzwerkeinheit 153 umfasst.

Bei der Vorrichtung 100 handelt es sich um eine Vorrichtung 100 zu einer Bestimmung einer Übertragungsqualität in einem Kommunikationsnetzwerk.

Eine erste Netzwerkeinheit 151 des Kommunikationsnetzwerks ist eingerichtet, eine erste Datenübertragung durchzuführen, indem von der erste Netzwerkeinheit 151 zu versendende erste Daten so übertragen werden, dass ein erstes Datenpaket von den ersten Daten abhängt.

Eine zweite Netzwerkeinheit 152 des Kommunikationsnetzwerks ist eingerichtet, eine zweite Datenübertragung durchzuführen, indem von der zweiten Netzwerkeinheit 152 zu versendende zweite Daten so übertragen werden, dass die zweiten Daten mit den ersten Daten in einem zweiten Datenpaket kombiniert sind.

Die Vorrichtung 100 umfasst eine Empfangseinheit 110, die ausgebildet ist, die zweite Datenübertragung zu empfangen.

Des Weiteren umfasst die Vorrichtung 100 eine Auswerteeinheit 120, die ausgebildet ist, eine erste Qualität der ersten Datenübertragung und/oder eine zweite Qualität der zweiten Datenübertragung zu bestimmen, indem die Auswerteeinheit 120 das zweite Datenpaket auswertet.

Gemäß einer Ausführungsform kann die Auswerteeinheit 120 z.B. ausgebildet sein, zu bestimmen, ob die erste Datenübertragung von der ersten Netzwerkeinheit 151 zu der zweiten Netzwerkeinheit 152 erfolgreich verlaufen ist, indem die Auswerteeinheit 120 einen Header des zweiten Datenpakets auswertet.

In einer Ausführungsform kann die Auswerteeinheit 120 z.B. ausgebildet sein, den Header des zweiten Datenpakets daraufhin auszuwerten, ob der Header des zweiten Datenpakets Codierinformationen zur Dekodierung der ersten Daten des zweiten Datenpakets umfasst.

Gemäß einer Ausführungsform kann die Auswerteeinheit 120 z.B. ausgebildet sein, den Header des zweiten Datenpakets daraufhin auszuwerten, ob der Header des zweiten Datenpakets einen Codier-Koeffizienten umfasst, den die zweite Netzwerkeinheit 151 zur Codierung der ersten Daten in dem zweiten Datenpaket verwendet hat.

In einer Ausführungsform kann die Empfangseinheit 110 z.B. ausgebildet sein, die erste Datenübertragung und die zweite Datenübertragung zu empfangen. Die Auswerteeinheit 120 kann dabei z.B. ausgebildet sein, eine erste Qualität der ersten Datenübertragung und/oder eine zweite Qualität der zweiten Datenübertragung zu bestimmen, indem die Auswerteeinheit 120 das erste Datenpaket und das zweite Datenpaket auswertet.

Gemäß einer Ausführungsform kann die Auswerteeinheit 120 der Vorrichtung 100 z.B. ausgebildet sein, die ersten Daten aus dem ersten Datenpaket als erste ermittelte Daten zu bestimmen. Dabei kann die Auswerteeinheit 120 der Vorrichtung 100 z.B. ausgebildet sein, unter Verwendung der ersten ermittelten Daten zu bestimmen, ob das zweite Datenpaket unter Verwendung der ersten Daten gebildet wurde. Die Auswerteeinheit 120 der Vorrichtung 100 kann z.B. ausgebildet sein, zu bestimmen, dass die erste Datenübertragung von der erste Netzwerkeinheit 151 zu der zweiten Netzwerkeinheit 152 erfolgreich verlaufen ist, wenn das zweite Datenpaket unter Verwendung der ersten Daten gebildet wurde. Des Weiteren kann die Auswerteeinheit 120 der Vorrichtung 100 z.B. ausgebildet sein, zu bestimmen, dass die erste Datenübertragung von der erste Netzwerkeinheit 151 zu der zweiten Netzwerkeinheit 152 nicht erfolgreich verlaufen ist, wenn das zweite Datenpaket nicht unter Verwendung der ersten Daten gebildet wurde.

In einer Ausführungsform kann eine dritte Netzwerkeinheit 153 des Kommunikationsnetzwerks z.B. eingerichtet sein, eine dritte Datenübertragung durchzuführen, indem von der dritten Netzwerkeinheit 153 zu versendende dritte Daten so übertragen werden, dass die dritten Daten mit den ersten Daten und mit den zweiten Daten in einem dritten Datenpaket kombiniert sind. Dabei kann die Auswerteeinheit 120 der Vorrichtung 100 z.B. ausgebildet sein, die ersten Daten aus dem ersten Datenpaket als erste ermittelte Daten zu bestimmen. Die Auswerteeinheit 120 der Vorrichtung 100 kann z.B. ausgebildet sein, die zweiten Daten aus dem zweiten Datenpaket als zweite ermittelte Daten zu bestimmen. Des Weiteren kann die Auswerteeinheit 120 der Vorrichtung 100 z.B. ausgebildet sein, unter Verwendung der ersten ermittelten Daten und unter Verwendung der zweiten ermittelten Daten zu bestimmen, ob das dritte Datenpaket unter Verwendung der ersten Daten und unter Verwendung der zweiten Daten gebildet wurde. Ferner kann die Auswerteeinheit 120 der Vorrichtung 100 z.B. ausgebildet sein, zu bestimmen, dass die erste Datenübertragung von der erste Netzwerkeinheit 151 zu der dritten Netzwerkeinheit 153 erfolgreich verlaufen ist, und dass die zweite Datenübertragung von der zweiten Netzwerkeinheit 152 zu der dritten Netzwerkeinheit 153 erfolgreich verlaufen ist, wenn das dritte Datenpaket unter Verwendung der ersten Daten und unter Verwendung der zweiten Daten gebildet wurde. Dabei kann die Auswerteeinheit 120 der Vorrichtung 100 z.B. ausgebildet sein, zu bestimmen, dass die erste Datenübertragung von der erste Netzwerkeinheit 151 zu der dritten Netzwerkeinheit 153 und/oder die zweite Datenübertragung von der zweiten Netzwerkeinheit 152 zu der dritten Netzwerkeinheit 153 nicht erfolgreich verlaufen ist, wenn das dritte Datenpaket nicht unter Verwendung von sowohl der ersten Daten als auch der zweiten Daten gebildet wurde.

Gemäß einer Ausführungsform kann die Vorrichtung 100 z.B. eine Sendeeinheit umfassen, die z.B. eingerichtet sein kann, eine erste weitere Datenübertragung durchzuführen, indem von der Sendeeinheit zu versendende erste weitere Daten so übertragen werden, dass die ersten weiteren Daten mit den ersten Daten und mit den zweiten Daten in einem ersten weiteren Datenpaket kombiniert sind. Die erste Netzwerkeinheit 151 oder die zweite Netzwerkeinheit 152 oder eine weitere Netzwerkeinheit 153 des Kommunikationsnetzwerks kann z.B. eingerichtet sein, eine zweite weitere Datenübertragung durchzuführen, indem zu versendende zweite weitere Daten so übertragen werden, dass die zweiten weiteren Daten mit den ersten weiteren Daten in einem zweiten weiteren Datenpaket kombiniert sind. Die Empfangseinheit 110 der Vorrichtung 100 kann z.B. ausgebildet sein, die zweite weitere Datenübertragung zu empfangen. Die Auswerteeinheit 120 der Vorrichtung 100 kann z.B. ausgebildet sein, unter Verwendung der ersten weiteren Daten zu bestimmen, ob das zweite weitere Datenpaket unter Verwendung der ersten weiteren Daten gebildet wurde. Des Weiteren kann die Auswerteeinheit 120 der Vorrichtung 100 z.B. ausgebildet sein, zu bestimmen, dass die erste weitere Datenübertragung von der Vorrichtung 100 zu der ersten Netzwerkeinheit 151 oder zu der zweiten Netzwerkeinheit 152 oder zu der weiteren Netzwerkeinheit 153 erfolgreich verlaufen ist, wenn das zweite weitere Datenpaket unter Verwendung der ersten weiteren Daten gebildet wurde. Ferner kann die Auswerteeinheit 120 der Vorrichtung 100 z.B. ausgebildet sein, zu bestimmen, dass die erste weitere Datenübertragung von der Vorrichtung 100 zu der ersten Netzwerkeinheit 151 oder zu der zweiten Netzwerkeinheit 152 oder zu der weiteren Netzwerkeinheit 153 nicht erfolgreich verlaufen ist, wenn das zweite weitere Datenpaket nicht unter Verwendung der ersten weiteren Daten gebildet wurde.

In einer Ausführungsform kann die Vorrichtung 100 z.B. eingerichtet sein, zu jedem Paar einer sendenden Netzwerkeinheit und einer empfangenden Netzwerkeinheit aus einer Gruppe von Netzwerkeinheiten des Kommunikationsnetzes, das die erste Netzwerkeinheit 151 und die zweite Netzwerkeinheit 152 umfasst, eine Linkstatistik zu führen, die jede von der Vorrichtung 100 festgestellte, erfolgreich verlaufende Datenübertragung von der sendenden Netzwerkeinheit zu der empfangenden Netzwerkeinheit als erfolgreiche Datenübertragung vermerkt und/oder die jede von der Vorrichtung 100 festgestellte, nicht erfolgreich verlaufende Datenübertragung von der sendenden Netzwerkeinheit zu der empfangenden Netzwerkeinheit als nicht erfolgreiche Datenübertragung vermerkt.

In einer Ausführungsform kann die zweite Netzwerkeinheit 152 z.B. ausgebildet sein, Informationen über eine Datenübertragungsqualität von der ersten Netzwerkeinheit 151 zu der zweiten Netzwerkeinheit 152 zu bestimmen. Dabei kann die zweite Netzwerkeinheit 152 z.B. ausgebildet sein, die Informationen über die Datenübertragungsqualität von der ersten Netzwerkeinheit 151 zu der zweiten Netzwerkeinheit 152 an die Vorrichtung 100 zu übermitteln, indem die zweite Netzwerkeinheit 152 eine Codierregel aus einer Gruppe von zwei oder mehr Codierregeln auswählt und die ersten Daten und/oder zweiten Daten und/oder eine Kombination der ersten Daten und der zweiten Daten in dem zweiten Datenpaket abhängig von der Kodierregel codiert und mit einem Prüfcode versieht. Die Vorrichtung 100 kann z.B. ausgebildet sein, die Informationen über die Datenübertragungsqualität von der ersten Netzwerkeinheit 151 zu der zweiten Netzwerkeinheit 152 zu ermitteln, indem die Vorrichtung 100 unter Verwendung des Prüfcodes, der in dem zweiten Datenpaket enthalten ist, die Codierregel der zwei oder mehr Codierregeln bestimmt, die von der zweiten Netzwerkeinheit 152. ausgewählt wurde. Beispielsweise kann es sich bei den Codierregeln, aus denen die zweite Netzwerkeinheit 152 auswählt, darum handeln, ob die zu versendenden Daten Big Endian-codiert oder Little Endian-codiert werden. Bei dem Prüfcode kann es sich beispielsweise um einen CRC-Code handeln oder um einen anderen fehlererkennenden Prüfcode oder um einen fehlerkorrigierenden Prüfcode. Die Vorrichtung kann beispielsweise mittels des übermittelten Prüfcodes bestimmen, ob es bei Dekodierung basierend auf Little Endian oder aber basierend auf Big Endian zu einer Übereinstimmung von berechnetem Prüfcode und übermitteltem Prüfcode kommt, ob die in dem zweiten Datenpaket codierten Daten also Little-Endian-codiert oder Big-Endian-codiert sind.

Gemäß einer Ausführungsform kann die zweite Netzwerkeinheit 152 z.B. eingerichtet sein, die zweite Datenübertragung durchzuführen, indem die von der zweiten Netzwerkeinheit 152 zu versendenden zweiten Daten so übertragen werden, dass die zweiten Daten mit den ersten Daten als das zweite Datenpaket durch Superposition kombiniert sind.

In einer Ausführungsform kann die zweite Netzwerkeinheit 152 z.B. eingerichtet sein, die zweite Datenübertragung durchzuführen, indem die von der zweiten Netzwerkeinheit 152 zu versendenden zweiten Daten so übertragen werden, dass die zweiten Daten mit den ersten Daten in dem zweiten Datenpaket XOR-verknüpft sind, oder dass die zweiten Daten durch eine gewichtete Addition mit den ersten Daten kombiniert sind, oder dass die zweiten Daten durch eine Superposition in einem Galoisfeld mit den ersten Daten kombiniert sind.

Gemäß einer Ausführungsform kann die zweite Netzwerkeinheit 152 z.B. eingerichtet sein, die ersten Daten, die mit einem ersten Codier-Koeffizienten kombiniert (z.B. multipliziert) sind, mit den zweiten Daten, die mit einem zweiten Codier-Koeffizienten kombiniert (z.B. multipliziert) sind, in dem zweiten Datenpaket zu kombinieren.

In einer Ausführungsform kann die zweite Netzwerkeinheit 152 z.B. eingerichtet sein, die ersten Daten, die mit einem ersten Codier-Koeffizienten multipliziert sind, mit den zweiten Daten, die mit einem zweiten Codier-Koeffizienten multipliziert sind, in dem zweiten Datenpaket XOR-zu-verknüpfen (eine XOR Verküpfung ist eine Superposition im Galois-Körper $\mathbb{F}_2^N$).

Gemäß einer Ausführungsform kann das Kommunikationsnetzwerk z.B. ein drahtloses Kommunikationsnetzwerk sein, wobei die erste Netzwerkeinheit 151 z.B. eine erste drahtlose Netzwerkeinheit sein kann, wobei die zweite Netzwerkeinheit 152 z.B. eine zweite drahtlose Netzwerkeinheit sein kann, und wobei die Empfangseinheit 110 der Vorrichtung 100 z.B. eine Empfangseinheit 110 zum Empfang von drahtlosen Datenübertragungen sein kann.

Des Weiteren wird in einem Ausführungsbeispiel eine Basisstation bereitgestellt, wobei die Basisstation die oben beschriebene Vorrichtung 100 umfassen kann.

Des Weiteren wird in einer Ausführungsform ein Kommunikationsnetzwerk bereitgestellt. Das Kommunikationsnetzwerk umfasst eine erste Netzwerkeinheit 151, eine zweite Netzwerkeinheit 152 und die oben beschriebene Vorrichtung 100 zu einer Bestimmung einer Übertragungsqualität in einem Kommunikationsnetzwerk. Dabei kann die erste Netzwerkeinheit 151 z.B. eingerichtet sein, eine erste Datenübertragung durchzuführen, indem von der erste Netzwerkeinheit 151 zu versendende erste Daten so übertragen werden, dass ein erstes Datenpaket von den ersten Daten abhängt. Des Weiteren kann die zweite Netzwerkeinheit 152 z.B. eingerichtet sein, eine zweite Datenübertragung durchzuführen, indem von der zweiten Netzwerkeinheit 152 zu versendende zweite Daten so übertragen werden, dass die zweiten Daten mit den ersten Daten in einem zweiten Datenpaket kombiniert sind. Ferner kann die Vorrichtung 100 z.B. eine Empfangseinheit 110 umfassen, die z.B. ausgebildet sein kann, die zweite Datenübertragung zu empfangen. Des Weiteren kann die Vorrichtung 100 z.B. eine Auswerteeinheit 120 umfassen, die z.B. ausgebildet sein kann, eine erste Qualität der ersten Datenübertragung und/oder eine zweite Qualität der zweiten Datenübertragung zu bestimmen, indem die Auswerteeinheit 120 das zweite Datenpaket auswertet.

Gemäß einer Ausführungsform kann das Kommunikationsnetzwerk beispielsweise ein drahtloses Kommunikationsnetzwerk sein. Dabei kann die erste Netzwerkeinheit 151 z.B. eine erste drahtlose Netzwerkeinheit sein. Die zweite Netzwerkeinheit 152 kann z.B. eine zweite drahtlose Netzwerkeinheit sein. Ferner kann die Empfangseinheit 110 der Vorrichtung 100 z.B. eine Empfangseinheit 110 zum Empfang von drahtlosen Datenübertragungen sein.

Bevor spezielle Ausführungsformen der Erfindung detailliert beschrieben werden, werden zunächst allgemeine Konzepte erläutert, auf denen Ausführungsformen der Erfindung basieren.

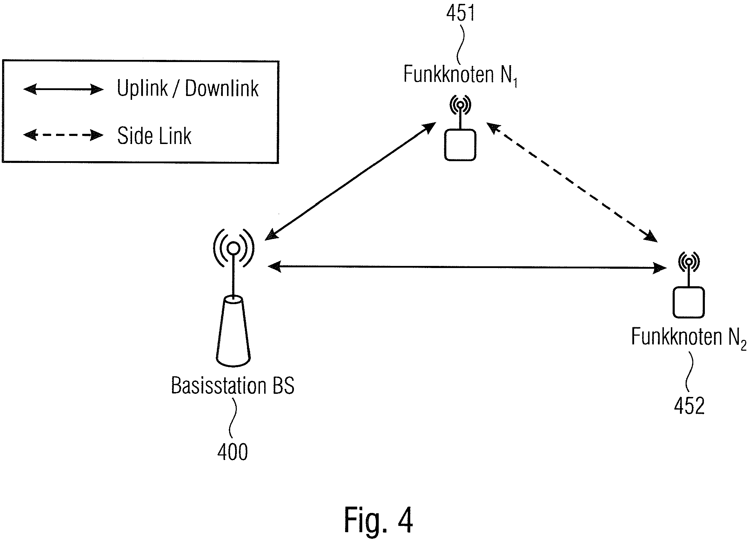

Grundsätzlich umfasst ein Netzwerk eine zentrale Basisstation (BS) und mehrere Funkknoten (engl. Radio Node, $N_x$). Die Basisstation bzw. übergeordnete Instanzen sind dabei für das Management des Netzwerks zuständig, insbesondere die Koordinierung des Kanalzugriffs und das Ressourcenmanagement. Das Netzwerk dient der Übertragung von Informationen zwischen räumlich verteilten Geräten. Eine Paketübertragung von der BS zur einem Funkknoten $N_x$ wird als Downlink (DL) -Übertragung bezeichnet, während eine Übertragung von einem Funkknoten $N_x$ zur BS als Uplink (UL) -Übertragung bezeichnet wird. Ein Funkknoten, von dem Nutzdaten übertragen werden sollen, wird als Quellknoten (engl. Source Node: SN) bezeichnet. Der Funkknoten, an den ein Paket übertragen wird, wird als Zielknoten (engl. Destination Node: DN) bezeichnet. Fig. 4 zeigt ein Beispiel für ein vollvermaschtes Funknetzwerk, bei dem die Basisstation 400 eine Verbindung (Uplink bzw. Downlink) mit allen Funkknoten 451, 452 hat und die Funkknoten 451, 452 auch untereinander in Verbindung stehen (engl. Side Links).

Für die vorliegende Erfindung wird ein Funksystem betrachtet, in dem der Kanalzugriff durch ein zentrales Ressourcenmanagement gesteuert wird. Das Ressourcenmanagement ist Teil des Netzwerkmanagements und ist üblicherweise in der Basisstation oder in einem übergeordnete System enthalten. Die Entscheidungen des Ressourcenmanagements werden über spezielle Nachrichten an die Funkknoten verteilt. Das auf der Bitübertragungsschicht (engl. Physical Layer) eingesetzte Modulationsverfahren erlaubt dabei eine Ressourceneinteilung in Zeit (Time Division Multiple Access, TDMA) oder einer Kombination einer Zeit- und Frequenzeinteilung, wie es beispielsweise in OFDMA (Orthogonal Frequency Division Multiple Access) oder Single Carrier-Frequency Division Multiple Access (SC-FDMA) realisiert ist. In diesem Fall können die Ressourcen in einem Zeit-Frequenz-Raster den einzelnen Übertragungen zugeordnet werden. Je nach eingesetztem Zugriffsverfahren arbeitet das Ressourcenmanagement auf Basis von Zeitschlitzen oder Zeit-Frequenzblöcken. Diese Einheiten werden nachfolgend als Ressourcen oder Ressourcenblöcke synonym bezeichnet. Zeitlich aufeinanderfolgende Zeit-Frequenzblöcke können auch als Zeitschlitze (engl. Slots) betrachtet werden.

Das betrachtete Funksystem führt eine isochrone zyklische Kommunikation durch, die in gleich große Rahmen (engl.: Superframes) eingeteilt ist. In jedem Superframe werden echtzeitkritische Prozessdaten der Anwendung übertragen (IRT Übertragung).

Nachfolgend wird Netzwerk-codierte Kooperation (Network Coded Cooperation; NCC) beschrieben.

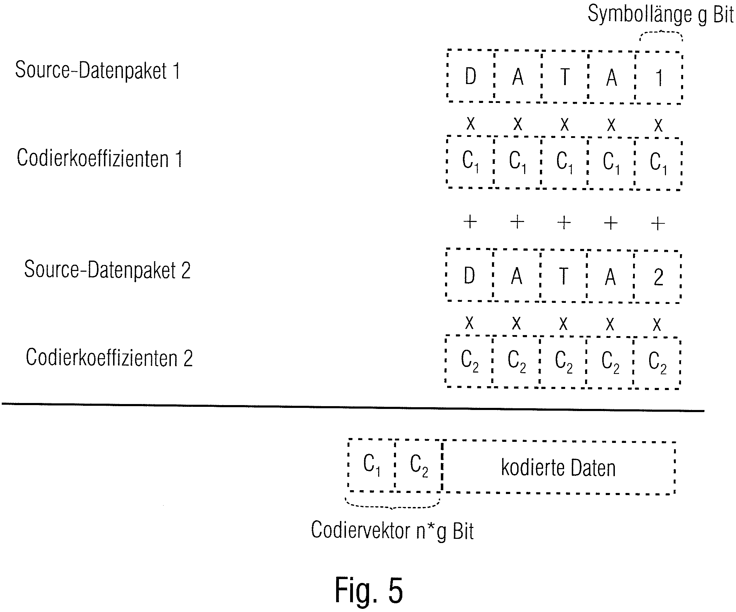

NCC beschreibt ein Konzept, bei dem Datenpakete vor einer Weiterleitung durch einen Router codiert zusammengefasst und als Superposition versendet werden. Dabei werden mehrere Datenpakete (Anzahl $n$) jeweils mit Koeffizienten (sog. Codierkoeffizienten) gewichtet und addiert. Hierfür wird die Algebra in endlichen Körpern eingesetzt und mit Multiplikation / Addition in Galois-Feldern mit einer Größe / Symbollänge von g Bit gearbeitet. So zeigt Fig. 5 eine beispielhafte Berechnung eines codierten Pakets anhand von zwei Source-Paketen.

Damit ein Empfänger das Paket decodieren kann, müssen Informationen über die beteiligten Pakete und deren jeweilige Codierkoeffizienten bekannt sein. Diese Codierkoeffizienten werden üblicherweise zu einem sog. Codiervektor zusammengefasst. Die Datenmenge g eines Codierkoeffizienten in Bit hängt von der verwendeten Größe/Dimension des Galois-Feldes ab. Für Galois-Felder mit Charakteristik 2 ergeben sich damit $2^g$ Codierkoeffizienten. Für die minimale Datenmenge von g=1 kann ein Codierkoeffizient die Werte 0 oder 1 annehmen.

Wenn nicht bekannt ist, welche Datenpakete enthalten sind und zwischen welchen Funkknoten diese übertragen werden sollen, muss noch eine zusätzliche Header-Information übertragen werden. Diese beinhaltet pro Source-Paket zwei logische Adressen, welche die Datenquelle sowie die Datensenke festlegen sowie einen Codierkoeffizienten, wobei eine logische Adresse durch eine sog. Knotenidentität (Node-ID/NID) beschrieben werden kann. Dazu besitzt jeder Funkknoten eine eindeutige NID.

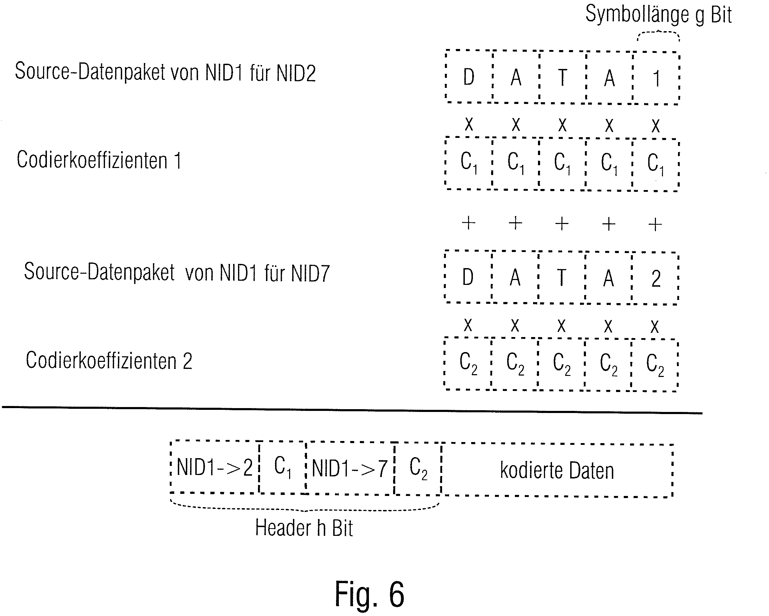

Fig. 6 zeigt ein Beispiel für ein codiertes Paket mit vollständigem Header.

Nachfolgend werden spezielle Ausführungsbeispiele der Erfindung beschrieben.

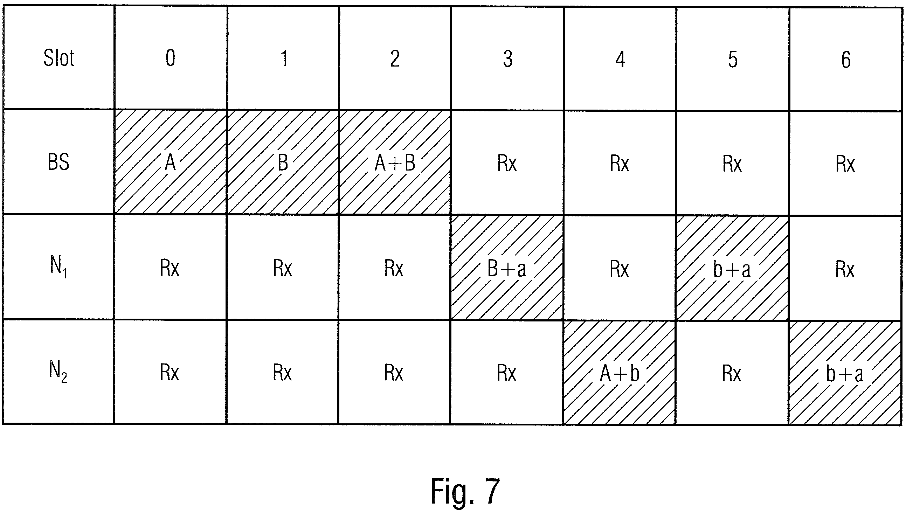

Fig. 7 zeigt eine beispielhafte Superframe Struktur mit Netzwerk-codierter Kooperation (Network Coded Cooperation; NCC) für ein Netzwerk wie in Fig. 4 dargestellt (Der sendende Knoten ist Grün markiert, die empfangenden Knoten sind mit Rx gekennzeichnet). Der Superframe setzt sich aus 7 Slots zusammen. Die Nachrichten "A" und "B" bezeichnet dabei die Nutzdaten, die die Basisstation zu $N_1$ bzw. $N_2$ übertragen möchte. Die Nachrichten "a" und "b" bezeichnet dabei die Nutzdaten die $N_1$ bzw. $N_2$ zur Basisstation übertragen müssen. In Slot 0 sendet beispielsweise die BS die Nachricht "A" aus. Die Funkknoten $N_1$ und $N_2$ versuchen das Paket zu empfangen (engl. Receive, Rx). In Slot 2 sendet die BS die über NCC kombinierte Nachricht "A" + "B" aus. Die nachfolgenden Slots werden genutzt, wie in Fig. 7 dargestellt ist. Die Superframestruktur wiederholt sich regelmäßig und kann auch noch weitere Slots enthalten.

Ausführungsbeispiele basieren darauf, dass die Funkknoten nur durch die Analyse der empfangenden Pakete auf den Zustand bzw. die Übertragungszuverlässigkeit der verschiedenen Verbindungen im Netzwerk zurückschließen können. Dies gilt sowohl für Verbindungen an denen der jeweilige Funkknoten aktiv beteiligt ist (d.h. Sende- oder Empfangsknoten ist), als auch für Verbindungen an denen er nicht aktiv beteiligt ist.

Das Verfahren wird nachfolgend beschrieben am Beispiel der Auswertung der von der Basisstation empfangenen Pakete. Dies stellt jedoch keine Einschränkung dar. Das Verfahren der Auswertung der empfangene Pakete kann auch auf jeden anderen Knoten im Netzwerk äquivalent angewendet werden.

| Slot ID | Auswertung des Paketempfangs | Auswertung des Inhalts des empfangene Paketes |
|---|---|---|
| 3 | Paket von $N_1$ korrekt empfangen oder nicht korrekt empfangen => Eintrag in Link-Statistik von UL Verbindung $N_1 \rightarrow$ BS: erfolgreiche oder fehlerhafte Übertragung in Slot 3 | • Paket enthält "B": Eintrag in Link Statistik von DL Verbindung BS -> $N_1$: erfolgreiche Übertragung |
|  |  | in Slot 1 oder Slot 0 & 2 <br> • Paket enthält nicht "B": Eintrag in Link Statistik von DL Verbindung BS -> $N_1$: fehlerhafte Übertragung in Slot 1 und Slot 0 & 2 <br> *- ähnelt HARQ Verfahren: Auswertung von ACK/NACK Paketen bzw. Flags -* |
| 4 | äquivalent zu Slot 3 | äquivalent zu Slot 3 |

(fortgesetzt)

| Slot ID | Auswertung des Paketempfangs | Auswertung des Inhalts des empfangene Paketes |
|---|---|---|
| 5 | Paket von $N_1$ korrekt empfangen oder nicht korrekt empfangen => Eintrag in LinkStatistik UL Verbindung $N_1 \rightarrow$ BS: erfolgreiche oder fehlerhafte Übertragung in Slot 3 | • Paket enthält "b": Eintrag in Link Statistik von Side Link $N_2 \rightarrow N_1$: erfolgreiche Übertragung in Slot 4<br>• Paket enthält nicht "b": Wenn BS das UL Paket von $N_1$ in Slot 3 empfangen konnte UND das Paket in Slot 3 "B" enthielt, dann hat $N_1$ mit überragender Wahrscheinlichkeit in Slot 4 das Paket von $N_2$ nicht empfangen. => Eintrag in Link Statistik für Side Link $N_2 \rightarrow N_1$: fehlerhafte Übertragung in Slot 4 |
| 6 | äquivalent zu Slot 5 | äquivalent zu Slot 5 |

Insbesondere durch die Auswertung der Inhalte der in Slot 5 und 6 empfangenen Pakete erhält die Basisstation Kenntnis über die Übertragungszuverlässigkeit auf dem Side Link $N_1$ -> $N_2$ und umgekehrt, ohne daran direkt beteiligt zu sein, bzw. diese Side Link Pakete empfangen zu müssen. Zudem ist hervorzuheben, dass die Basisstation diese Informationen über die Side Links erhält, ohne dass die betroffenen Knoten $N_1$ und $N_2$ zusätzliche Monitoring-Pakete oder Monitoring-Informationen an die Basisstation übertragen müssen.

Zu bemerken ist, dass die Auswertung der empfangenen Pakete und deren Inhalt sowohl Slot für Slot während des Ablaufs des Superframes erfolgen kann oder alternativ auch zum Ende eines Superframes ausgewertet werden kann.

Zu bemerken ist weiterhin, dass das vorgestellte Verfahren für beliebige Network Coding Matrizen genutzt werden kann, insbesondere für größere Kooperationsgrade in denen mehr als zwei Nachrichten in einem NCC encodierten Paket übertragen werden.

Im Folgenden wird eine Übertragung detaillierter Güteparameter gemäß Ausführungsformen der Erfindung dargestellt.

Da das oben vorgestellte Verfahren nur Paketfehler zur Beurteilung der Verbindung heranzieht, bietet es in Situationen, in denen Paketfehler nur selten auftreten, nur begrenzte Aussagekraft. Eine Verbesserung ist daher, weitere Parameter zur Beurteilung der Linkqualität zu analysieren, die schon auf eine Beeinträchtigung der Verbindung hinweisen, bevor ein Paketverlust auftritt. Dies können beispielsweise Parameter, wie ein Signal-Rausch-Abstand (SNR), und/oder eine Empfangsleistung (RSSI), und/oder eine Anzahl der durch die Fehlerschutzkodierung korrigierten Bitfehler sein.

Für die Beurteilung der Linkqualität können diese Informationen entweder direkt oder daraus abgeleitete Größen herangezogen werden. Die Wahl der herangezogenen Parameter sowie deren Verarbeitung muss jedem mitgeteilt werden, beispielsweise durch eine feste Konfiguration oder eine Übertragung zur Laufzeit. Beispielhafte Verarbeitungsschritte können z.B. ein Zusammenfassen mehrerer Parameter zu einer Metrik, und/oder eine Quantisierung, und/oder eine Schwellwertbildung, und/oder eine Entzerrung, und/oder eine Kompression, und/oder eine Kombination davon, sein.

Die Linkparameter oder daraus abgeleitete Größen müssen über die Luft übertragen werden, um sie dem Netzwerkmanagement nutzbar zu machen. Wie oben beschrieben, müsste nach derzeitigem Stand der Technik für die Übertragung dieser Zusatzinformation die Größe der übertragbaren Nutzdaten reduziert werden (durch Übertragung zusätzlicher Pakete oder die Allokation von Bitfeldern in zu übertragenden Paketen).

Um diese Reduzierung der übertragbaren Nutzdatenmenge zu vermeiden, werden in der vorliegenden Erfindung folgenden Lösungsverfahren vorgeschlagen:
Ausführungsformen können, z.B. eine Modifikation der Codierkoeffizienten realisieren. Die Codierkoeffizienten werden verändert, wenn ein Parameter einen entsprechenden Schwellwert über- bzw. unterschreitet. Alternativ kann aus einer vordefinierten Menge an Codierkoeffizienten ausgewählt werden, um einen gewissen Wertebereich eines Parameters zu repräsentieren. Beispielsweise kann der Exponent der Bitfehlerrate direkt als Codierkoeffizient verwendet werden.

Ausführungsformen können z.B. eine Manipulation der Paketstruktur realisieren. Die Linkanalyse-Ergebnisse können in komprimierter oder quantisierter Form übertragen werden, indem die zu sendende NCC Nachricht oder Teile gezielt manipuliert werden. Eine solche Manipulation führt dazu, dass der Empfänger ohne Kenntnis der Manipulation die Nachricht nicht korrekt dekodieren kann. Ein solcher Decodierfehler wird im Empfänger durch einen üblicherweise eingesetzten Fehlerdetektionscode wie zum Beispiel CRC-8 erkannt, kann aber nicht korrigiert werden. Wird jedoch die Menge der möglichen Manipulationen eingeschränkt, so kann der Empfänger alle denkbaren Manipulationen durchprobieren und zurücknehmen, bis die Nachricht erfolgreich dekodiert werden kann und die Überprüfung des Fehlerdetektionscodes erfolgreich ist.

Begrenzt wird dieses Verfahren von der fehlererkennenden Eigenschaft des eingesetzten Codes. Mit jeder zusätzlichen Modifikation steigert man die Wahrscheinlichkeit, dass ein ungültiges Paket als gültig erkannt wird.

Beispielhafte Modifikationen sind unter anderem ein Wechsel der Byte- oder Bit-Reihenfolge, und/oder eine Rotation des gesamten Pakets oder Teilen davon um ein bestimmte Anzahl Bits; und/oder eine Superposition des Pakets mit einem kurzen Datenwort oder einzelnen Bits mittels XOR, und/oder eine Inversion des Pakets, einzelner Teile davon oder einzelner Bits an bestimmten Stellen.

Diese Modifikation kann auf das gesamte Sendepaket angewendet werden oder, beim Einsatz von NCC, nur auf ein Teilpaket.

Beispielsweise kann das Verfahren auf die in Fig. 7 dargestellte Superframe Struktur angewendet werden. $N_1$ empfängt in Slot 4 die Paketsuperposition "A"+"b" und misst dabei den Signal-Rausch-Abstand. Liegt er unter einem vorher festgelegten Schwellwert, überträgt $N_1$ im Slot 5 die Paketsuperposition "b"+"a" in Big Endian Notation. Liegt der Signal-Rausch-Abstand unter dem Schwellwert, überträgt $N_1$ im Slot 5 die Paketsuperposition "b"+"a" in Little Endian Notation.

Die Empfänger interpretieren die empfangene Paketsuperposition "b"+"a" sowohl als Big Endian als auch als Little Endian und decodieren die Pakete. In einem Fall schlägt die Decodierung fehl, im anderen ist sie erfolgreich. Je nachdem welche Decodierung erfolgreich war, erfährt der Empfänger, ob die Übertragung im Slot 5 ein SNR über oder unter dem zuvor festgelegten Schwellwert hatte.

In Ausführungsformen der Erfindung findet keine direkte Übertragung der Paketfehlerrate oder darauf zurückschließbarer Güteparameter statt. Die Paketfehlerrate wird aus Informationen abgeleitet, die aus den empfangenen Paketen durch Ausnutzung der Netzwerkcodierung gewonnen werden.

Für die Übertragung detaillierterer Güteparameter der Linkanalyse von Side Links müssen in Ausführungsformen weder ein zusätzlicher Speicherplatz im Paket reserviert werden noch müssen zusätzliche Pakete übertragen werden. Die Informationen der Güteparameter werden durch die Modifikation der NCC Codierung oder durch die Manipulation der Struktur der NCC Pakete übertragen.

Nachfolgend wird ein erstes detailliertes Ausführungsbeispiel dargestellt.

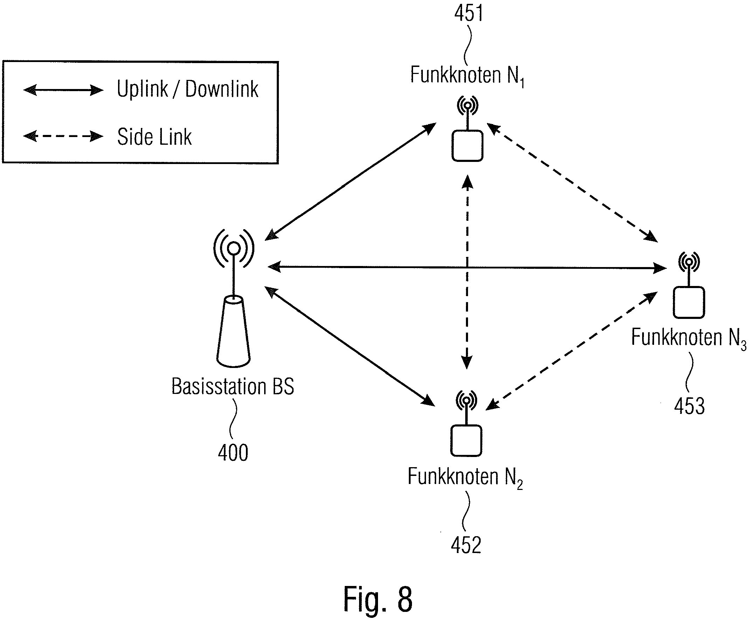

In einem in Fig. 8 gezeigten Ausführungsbeispiel wird eine Topologie eines Netzwerks mit einer Basisstation 400 und drei Funkknoten 451, 452, 453 gezeigt.

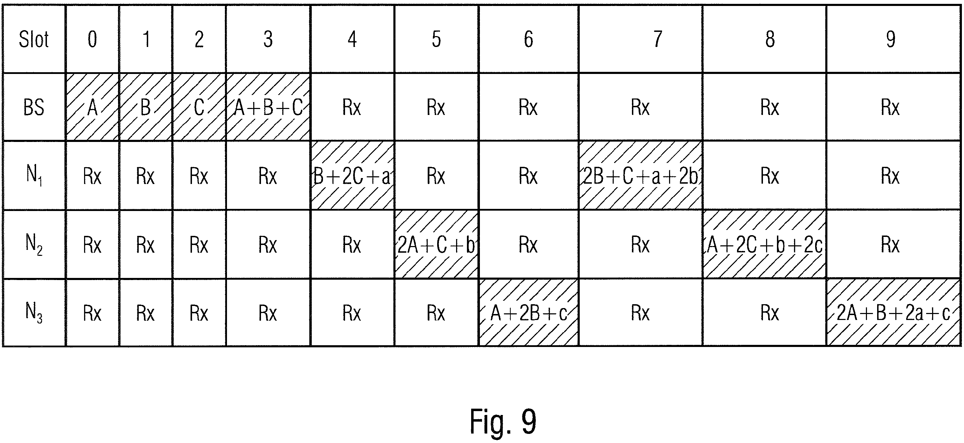

In Fig. 9 zeigt ein Beispiel für eine mögliche Superframestruktur mit Netzwerk-codierter Kooperation, wobei das Netzwerk eine Basisstation und drei Funkknoten aufweist.

Zur Zwischenspeicherung der Daten der Linkanalyse wird eine Datenbank (DB) genutzt. Jeder Eintrag in die Datenbank enthält die Superframe Nummer, die Sendeknoten ID, die Empfangsknoten ID und den Status über den Paketempfang (0 - erfolgreich oder 1 - Übertragungsfehler). Diese Werte lassen sich als Daten-Tupel {Superframe Nr., Sendeknoten ID, Empfangsknoten ID, Status des Paketempfang} zusammenfassen. Beispielsweise wird die erfolgreiche Paketübertragung in Superframe 12 auf der Verbindung von Knoten $N_1$ zu Knoten $N_2$ durch das Datentupel {12, $N_1$, $N_2$, 0} beschrieben.

Zur Vereinfachung der Erläuterung des Ausführungsbeispiels werden folgende Notationen verwendet.

$$Rx_i^{N_x,N_y} = True$$

beschreibt den Fall, dass der Funkknoten $N_x$ das Paket von $N_y$ in Slot i korrekt empfangen konnte. Äquivalent beschreibt

$$Rx_i^{N_x,N_y} = False$$

den Fall, dass der Funkknoten $N_x$ das Paket von $N_y$ in Slot i nicht korrekt empfangen konnte.

$$\{A, B\} \subseteq P_i^{N_y}$$

beschreibt, dass in dem von Funkknoten $N_y$ in Slot i ausgesandte Paket die Nachrichten "A" und "B", über NCC encodiert, enthalten sind.

Nach Ablauf des Superframes beginnt die Basisstation mit der Auswertung der empfangen Pakete und deren Inhalt. Die Basisstation kann durch Auswertung der in den Slots 6 - 11 empfangenen Pakete auf die Paketfehlerrate auf den verschiedenen Verbindungen zurückschließen.

Dies wird nachfolgend beschrieben für den Superframe k, dessen Struktur in Fig. 9 dargestellt ist.

| Slot ID | Auswertung des Paketempfangs | Auswertung des Inhalts des empfangene Paketes |
|---|---|---|
| 4 | IF $\left(Rx_4^{BS,N_1} = True\right)$ THEN<br><br>DB-Eintrag<br>$\{k, N_1, BS, 0\}$<br>ELSE<br>DB-Eintrag<br>$\{k, N_1, BS, 1\}$ | IF $(\{B, C\} \subseteq P_4^{N_1})$ THEN<br><br>DB-Eintrag $\{k, BS, N_1, 0\}$<br>ELSE<br>DB-Eintrag $\{k, BS, N_1, 1\}$ |
| 5 | äquivalent zu Slot 4 | äquivalent zu Slot 4 |
| 6 | äquivalent zu Slot 4 | äquivalent zu Slot 4 |
| 7 | IF $\left(Rx_7^{BS,N_1} = True\right)$<br>THEN<br>DB-Eintrag<br>$\{k, N_1, BS, 0\}$<br>ELSE<br>DB-Eintrag<br>$\{k, N_1, BS, 1\}$ | IF $(\{b\} \subseteq P_7^{N_1})$<br><br>THEN<br>DB-Eintrag $\{k, N_2, N_1, 0\}$<br>ELSE<br>IF $(\{B,C\} \subseteq P_7^{N_1})$<br>THEN<br>DB-Eintrag<br>$\{k, N_2, N_1, 1\}$ |
| 8 | äquivalent zu Slot 7 | äquivalent zu Slot 7, d.h.<br>IF $(\{c\} \subseteq P_8^{N_2})$<br>THEN<br>DB-Eintrag $\{k, N_3, N_2, 0\}$<br>ELSE<br>IF $(\{A, C\} \subseteq P_5^{N_2})$ OR $(\{A, C\} \subseteq P_8^{N_2})$<br>THEN<br>DB-Eintrag $\{k, N_3, N_2, 1\}$ |
| 9 | äquivalent zu Slot 7 | äquivalent zu Slot 7, d.h.<br>IF $(\{a\} \subseteq P_9^{N_3})$<br>THEN<br>DB-Eintrag $\{k, N_1, N_3, 0\}$<br>ELSE<br>IF $(\{A, B\} \subseteq P_6^{N_3})$ OR $(\{A, B\} \subseteq P_9^{N_3})$<br>THEN<br>DB-Eintrag $\{k, N_1, N_3, 1\}$ |

Durch Filterung der Datenbank der Linkanalyse auf einzelnen Verbindungen und mithilfe eines gleitenden Zeitfensters (engl. sliding window) kann die mittlere Paketfehlerrate von einer Verbindung zu einem bestimmten Zeitpunkt berechnet werden. Dieser Schritt kann für alle in der Datenbank gelisteten Verbindungen durchgeführt werden, woraus sich ein Gesamtübersicht über die Verbindungsqualität im Netzwerk ergibt. Diese Information kann u.a. dem Netzwerkmanagement zur Verfügung gestellt oder in anderer Weise genutzt werden.

Nachfolgend wird ein zweites detailliertes Ausführungsbeispiel bereitgestellt.

Aufbauend auf dem Szenario aus dem ersten detaillierten Ausführungsbeispiel sollen in diesem Ausführungsbeispiel zusätzliche Informationen zur Qualität der Side-Links an die Basisstation übertragen werden. Auch hier soll die in Fig. 8 gezeigte Netzwerktopologie umfassend eine Basisstation und drei Funkknoten sowie die in Fig. 9 beschriebene Codematrix verwendet werden.

Zur Bestimmung der Qualität der Verbindungen soll das SNR der Side-Links erhoben, quantisiert, zur Basisstation übermittelt werden und dort in die Linkanalyse einfließen.

Wie in Ausführungsbeispiel 1 soll zur Zwischenspeicherung der Daten der Linkanalyse eine Datenbank (DB) genutzt. Auch hier enthält jeder Eintrag in die Datenbank die Superframe Nummer, die Sendeknoten ID, die Empfangsknoten ID und den Status über den Paketempfang (0 - erfolgreich oder 1 - Übertragungsfehler). Zusätzlich wird auch das mit zwei Bit Auflösung quantisierte Signal-Rausch-Verhältnis abgespeichert. Dabei findet folgende Zuordnung zwischen dem quantisierten Wert und dem Signal-Rausch-Verhältnis Anwendung:

| Quantisierungswert | Signal-Rausch-Verhältnis (SNR) |
|---|---|
| 0b00 (0) | < 10 dB |
| Ob01 (1) | 10 dB - 20 dB |
| 0b10 (2) | 20 dB - 30 dB |
| 0b11 (3) | > 30 dB |

Diese Werte lassen sich als Daten-Tupel {Superframe Nr., Sendeknoten ID, Empfangsknoten ID, Status des Paketempfang, SNR} zusammenfassen. Beispielsweise wird die erfolgreiche Paketübertragung mit einem SNR zwischen 20 dB und 30 dB in Superframe 12 in Slot 6 auf der Verbindung von Knoten $N_1$ zu Knoten $N_2$ durch das Datentupel {12, $N_1$, $N_2$, 0, 0b10} beschrieben.

Als Beispiel für den Kommunikationsablauf wird beispielhaft der Funkknoten $N_2$ betrachtet. In den Slots 0, 1, 2 und 3 empfängt er Pakete von der Basisstation. Dabei handelt es sich noch nicht um einen Side-Link. Im Slot 4 aber sendet der Funkknoten $N_1$. Der Funkknoten $N_2$ empfängt die gesendete Nachricht und misst dabei das Signal-zu-Rausch Verhältnis SNR. Das gemessene SNR wird im Funkknoten $N_2$ quantisiert und als $SNR_q$ abgespeichert.

Im Slot 5 hat der Funkknoten $N_2$ einen Sendeslot und soll die Superposition "2A"+"C"+"b" senden. Um in das zu sendende Paket das quantisierte SNR hineinzucodieren, rotiert der Funkknoten das Teilpaket "b" entsprechend des Wertes von $SNR_q$ um 0, 1, 2 oder 3 Bit nach rechts. Die gesendete Superposition lautet also "2A"+"C"+rot("b", $SNR_q$).

Die Basisstation und die Funkknoten $N_1$ und $N_3$ empfangen die rotierte Nachricht. Beispielhaft soll nun das Decodierverfahren in der Basisstation beschrieben werden. Dies stellt jedoch keine Einschränkung dar. Die Knoten $N_1$ und $N_3$ können ihrerseits ebenfalls das nachfolgend beschriebenen Decodierverfahren durchführen.

Die Basisstation empfängt die gesendete Paketsuperposition "2A"+"C"+rot("b", $SNR_q$) und versucht sie zu decodieren. Die Teilnachrichten "A" und "C" sind bekannt, da sie von der Basis selbst gesendet wurden. Durch Subtraktion lässt sich die Teilnachricht rot("b", $SNR_q$) extrahieren.

Diese rotierte Teilnachricht wird nun in der Basis parallel um 0, 1, 2 und 3 Bit nach links rotiert und jede dieser Rotationen wird auf Integrität überprüft. Dabei kommt der Fehlerschutzcode CRC-16 zum Einsatz. Die Überprüfung wird nur dann erfolgreich sein, wenn beim Decodieren die Nachricht um $SNR_q$ nach links rotiert wurde. Auf diese Weise erfährt die Basisstation das quantisierte Signal-Rausch-Verhältnis des Side-Links zwischen den Knoten $N_1$ und $N_2$ und kann ihn in der Datenbank der Linkanalyse abspeichern. Für alle weiteren Knoten und Side-Links werden diese Schritte analog ausgeführt.

Ein Vorteil von Ausführungsformen besteht in der Netzwerk-Analyse ohne Signalisierungsaufwand. Durch die bereitgestellten Konzepte erhält das Netzwerkmanagement jederzeit und verzögerungsfrei aktuelle Informationen über den Zustand der Verbindungen im Netzwerk, ohne dafür zusätzliche Übertragungsressourcen (Bitfelder in zu übertragenden Paketen oder zusätzliche Pakete) zu benötigen. D.h., es bestehen keine Einschränkungen bei der Menge der übertragbaren Nutzdaten und/oder die nötige Sendedauer muss nicht verlängert werden.

Ein weiterer Vorteil liegt in der Erhöhung der Zuverlässigkeit: Da das Netzwerkmanagement jederzeit den aktuellen Zustand der Verbindungen im Netzwerk kennt, kann es dieses Wissen zur optimalen Anpassung der Kodiervorschrift der eingesetzten Netzwerkkodierung und/oder der Ressourcenzuweisung zu den einzelnen Verbindungen an den aktuellen Zustand der Verbindungen im Netzwerk nutzen. Im Ergebnis kann dadurch die Übertragungszuverlässigkeit auf den Verbindungen deutlich gesteigert werden.

Des Weiteren liegt ein Vorteil in einer effizienteren Nutzung der Funkübertragungsressourcen: Da das Netzwerkmanagement jederzeit den aktuellen Zustand der Verbindungen im Netzwerk kennt, kann es dieses Wissen zur Optimierung des Ressourcen-Schedulings nutzen, d.h. jeder Verbindung werden nur so viele Ressourcen zugewiesen, wie tatsächlich benötigt werden.

Ein weiterer Vorteil liegt in einer Verringerung der Übertragungslatenzen: Da die Übertragungsressourcen optimal an den Zustand der aktuellen Verbindung angepasst werden können, wird die Notwendigkeit von Paketwiederholungen verringert und somit die Ende-zu-Ende Übertragungslatenz verringert.

Des Weiteren liegt ein Vorteil in der Eignung für Funksysteme mit sehr hohen Echtzeit- und Zuverlässigkeitsanforderungen: Durch die oben beschriebenen technischen Eigenschaften und der daraus erwachsenden Vorteile eignet sich das vorgestellte Verfahren insbesondere für Funksysteme an die sehr hohe Anforderungen hinsichtlich ihrer Echtzeitfähigkeit (d.h. extrem kurze, garantierte Übertragungslatenzen) und Zuverlässigkeit (d.h. extrem niedrige Übertragungsfehlerwahrscheinlichkeit) gestellt sind.

In Ausführungsformen weist eine Struktur der übertragenen Funkpakete nur einen Paketheader und Nutzdaten auf, die mittels Network Coded Cooperation encodiert sind. Die Funkpakete enthalten keine separaten Bitfelder zur Übertragung der Verbindungsqualität. Beispielsweise ein Netzwerk Manager (englisch: Network Manager) kann dennoch über Informationen über Side Links im Netzwerk verfügen, an denen die Basisstation (oder der betreffende Funkknoten, an den der Netzwerk Manager angebunden ist) nicht aktiv beteiligt ist. Diese Informationen werden beispielsweise zur Festlegung/Adaption der Codiermatrix oder zur Ausgabe an Nutzer (Visualisierung) oder an andere technische Systeme (z.B. ein übergeordnetes Management oder das Management eines benachbarten Kommunikationssystems) genutzt.

In Ausführungsformen wird die Struktur der Pakete mit NCC encodierten Nutzdaten in Abhängigkeit der Verbindungsqualität zwischen den Funkknoten modifiziert.

Ein technisches Anwendungsgebiet der vorgestellten Erfindung ist ein Funksystem das sehr hohe Anforderungen hinsichtlich seiner hohen Übertragungszuverlässigkeit erfüllen muss und das hierfür Kooperationsverfahren wie beispielsweise aus dem Bereich des Cooperative Relaying oder Network Coded Cooperation einsetzt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (100; 400) zu einer Bestimmung einer Übertragungsqualität in einem Kommunikationsnetzwerk,
   wobei eine erste Netzwerkeinheit (151; 451) des Kommunikationsnetzwerks eingerichtet ist, eine erste Datenübertragung durchzuführen, indem von der ersten Netzwerkeinheit (151; 451) zu versendende erste Daten so übertragen werden, dass ein erstes Datenpaket von den ersten Daten abhängt,
   wobei eine zweite Netzwerkeinheit (152; 452) des Kommunikationsnetzwerks eingerichtet ist, eine zweite Datenübertragung durchzuführen, indem von der zweiten Netzwerkeinheit (152; 452) zu versendende zweite Daten so übertragen werden, dass die zweiten Daten mit den ersten Daten in einem zweiten Datenpaket kombiniert sind,
   wobei die Vorrichtung (100; 400) eine Empfangseinheit (110) umfasst, die ausgebildet ist, die zweite Datenübertragung zu empfangen, und
   wobei die Vorrichtung (100; 400) eine Auswerteeinheit (120) umfasst, die ausgebildet ist, eine erste Qualität der ersten Datenübertragung und/oder eine zweite Qualität der zweiten Datenübertragung zu bestimmen, indem die Auswerteeinheit (120) das zweite Datenpaket auswertet.

2. Vorrichtung (100; 400) nach Anspruch 1,
   wobei die Auswerteeinheit (120) ausgebildet ist, zu bestimmen, ob die erste Datenübertragung von der ersten Netzwerkeinheit (151; 451) zu der zweiten Netzwerkeinheit (152; 452) erfolgreich verlaufen ist, indem die Auswerteeinheit (120) einen Header des zweiten Datenpakets auswertet.

3. Vorrichtung (100; 400) nach Anspruch 2,
   wobei die Auswerteeinheit (120) ausgebildet ist, den Header des zweiten Datenpakets daraufhin auszuwerten, ob der Header des zweiten Datenpakets Codierinformationen zur Dekodierung der ersten Daten des zweiten Datenpakets umfasst.

4. Vorrichtung (100; 400) nach Anspruch 2 oder 3,
   wobei die Auswerteeinheit (120) ausgebildet ist, den Header des zweiten Datenpakets daraufhin auszuwerten, ob der Header des zweiten Datenpakets einen Codier-Koeffizienten umfasst, den die zweite Netzwerkeinheit (151; 451) zur Codierung der ersten Daten in dem zweiten Datenpaket verwendet hat.

5. Vorrichtung (100; 400) nach einem der vorherigen Ansprüche,
   wobei die Empfangseinheit (110) ausgebildet ist, die erste Datenübertragung und die zweite Datenübertragung zu empfangen,
   wobei die Auswerteeinheit (120) ausgebildet ist, eine erste Qualität der ersten Datenübertragung und/oder eine zweite Qualität der zweiten Datenübertragung zu bestimmen, indem die Auswerteeinheit (120) das erste Datenpaket und das zweite Datenpaket auswertet.

6. Vorrichtung (100; 400) nach Anspruch 5,
   wobei die Auswerteeinheit (120) der Vorrichtung (100; 400) ausgebildet ist, die ersten Daten aus dem ersten Datenpaket als erste ermittelte Daten zu bestimmen, und
   wobei die Auswerteeinheit (120) der Vorrichtung (100; 400) ausgebildet ist, unter Verwendung der ersten ermittelten Daten zu bestimmen, ob das zweite Datenpaket unter Verwendung der ersten Daten gebildet wurde,

wobei die Auswerteeinheit (120) der Vorrichtung (100; 400) ausgebildet ist, zu bestimmen, dass die erste Datenübertragung von der ersten Netzwerkeinheit (151; 451) zu der zweiten Netzwerkeinheit (152; 452) erfolgreich verlaufen ist, wenn das zweite Datenpaket unter Verwendung der ersten Daten gebildet wurde, und

wobei die Auswerteeinheit (120) der Vorrichtung (100; 400) ausgebildet ist, zu bestimmen, dass die erste Datenübertragung von der ersten Netzwerkeinheit (151; 451) zu der zweiten Netzwerkeinheit (152; 452) nicht erfolgreich verlaufen ist, wenn das zweite Datenpaket nicht unter Verwendung der ersten Daten gebildet wurde.

7.  Vorrichtung (100; 400) nach einem der vorherigen Ansprüche,
    wobei eine dritte Netzwerkeinheit (153; 453) des Kommunikationsnetzwerks eingerichtet ist, eine dritte Datenübertragung durchzuführen, indem von der dritten Netzwerkeinheit (153; 453) zu versendende dritte Daten so übertragen werden, dass die dritten Daten mit den ersten Daten und mit den zweiten Daten in einem dritten Datenpaket kombiniert sind,
    wobei die Auswerteeinheit (120) der Vorrichtung (100; 400) ausgebildet ist, die ersten Daten aus dem ersten Datenpaket als erste ermittelte Daten zu bestimmen, und
    wobei die Auswerteeinheit (120) der Vorrichtung (100; 400) ausgebildet ist, die zweiten Daten aus dem zweiten Datenpaket als zweite ermittelte Daten zu bestimmen, und
    wobei die Auswerteeinheit (120) der Vorrichtung (100; 400) ausgebildet ist, unter Verwendung der ersten ermittelten Daten und unter Verwendung der zweiten ermittelten Daten zu bestimmen, ob das dritte Datenpaket unter Verwendung der ersten Daten und unter Verwendung der zweiten Daten gebildet wurde,
    wobei die Auswerteeinheit (120) der Vorrichtung (100; 400) ausgebildet ist, zu bestimmen, dass die erste Datenübertragung von der ersten Netzwerkeinheit (151; 451) zu der dritten Netzwerkeinheit erfolgreich verlaufen ist, und dass die zweite Datenübertragung von der zweiten Netzwerkeinheit (152; 452) zu der dritten Netzwerkeinheit erfolgreich verlaufen ist, wenn das dritte Datenpaket unter Verwendung der ersten Daten und unter Verwendung der zweiten Daten gebildet wurde, und
    wobei die Auswerteeinheit (120) der Vorrichtung (100; 400) ausgebildet ist, zu bestimmen, dass die erste Datenübertragung von der ersten Netzwerkeinheit (151; 451) zu der dritten Netzwerkeinheit und/oder die zweite Datenübertragung von der zweiten Netzwerkeinheit (152; 452) zu der dritten Netzwerkeinheit nicht erfolgreich verlaufen ist, wenn das dritte Datenpaket nicht unter Verwendung von sowohl der ersten Daten als auch der zweiten Daten gebildet wurde.

8.  Vorrichtung (100; 400) nach einem der vorherigen Ansprüche,
    wobei die Vorrichtung (100; 400) eine Sendeeinheit umfasst, die eingerichtet ist, eine erste weitere Datenübertragung durchzuführen, indem von der Sendeeinheit zu versendende erste weitere Daten so übertragen werden, dass die ersten weiteren Daten mit den ersten Daten und mit den zweiten Daten in einem ersten weiteren Datenpaket kombiniert sind,
    wobei die erste Netzwerkeinheit (151; 451) oder die zweite Netzwerkeinheit (152; 452) oder eine weitere Netzwerkeinheit (153; 453) des Kommunikationsnetzwerks eingerichtet ist, eine zweite weitere Datenübertragung durchzuführen, indem zu versendende zweite weitere Daten so übertragen werden, dass die zweiten weiteren Daten mit den ersten weiteren Daten in einem zweiten weiteren Datenpaket kombiniert sind,
    wobei die Empfangseinheit (110) der Vorrichtung (100; 400) ausgebildet ist, die zweite weitere Datenübertragung zu empfangen,
    wobei die Auswerteeinheit (120) der Vorrichtung (100; 400) ausgebildet ist, unter Verwendung der ersten weiteren Daten zu bestimmen, ob das zweite weitere Datenpaket unter Verwendung der ersten weiteren Daten gebildet wurde,
    wobei die Auswerteeinheit (120) der Vorrichtung (100; 400) ausgebildet ist, zu bestimmen, dass die erste weitere Datenübertragung von der Vorrichtung (100; 400) zu der ersten Netzwerkeinheit (151; 451) oder zu der zweiten Netzwerkeinheit (152; 452) oder zu der weiteren Netzwerkeinheit (153; 453) erfolgreich verlaufen ist, wenn das zweite weitere Datenpaket unter Verwendung der ersten weiteren Daten gebildet wurde, und
    wobei die Auswerteeinheit (120) der Vorrichtung (100; 400) ausgebildet ist, zu bestimmen, dass die erste weitere Datenübertragung von der Vorrichtung (100; 400) zu der ersten Netzwerkeinheit (151; 451) oder zu der zweiten Netzwerkeinheit (152; 452) oder zu der weiteren Netzwerkeinheit (153; 453) nicht erfolgreich verlaufen ist, wenn das zweite weitere Datenpaket nicht unter Verwendung der ersten weiteren Daten gebildet wurde.

9.  Vorrichtung (100; 400) nach einem der vorherigen Ansprüche,
    wobei die Vorrichtung (100; 400) eingerichtet ist, zu jedem Paar einer sendenden Netzwerkeinheit und einer empfangenden Netzwerkeinheit aus einer Gruppe von Netzwerkeinheiten des Kommunikationsnetzes, das die erste Netzwerkeinheit (151; 451) und die zweite Netzwerkeinheit (152; 452) umfasst, eine Linkstatistik zu führen, die jede von der Vorrichtung (100; 400) festgestellte, erfolgreich verlaufende Datenübertragung von der sendenden Netzwerkeinheit zu der empfangenden Netzwerkeinheit als erfolgreiche Datenübertragung vermerkt und/oder die jede von der Vorrichtung (100; 400) festgestellte, nicht erfolgreich verlaufende Datenübertragung von der sendenden Netzwerkeinheit zu der empfangenden Netzwerkeinheit als nicht erfolgreiche Datenübertragung vermerkt.

10. Vorrichtung (100; 400) nach einem der vorherigen Ansprüche,
wobei die zweite Netzwerkeinheit (152; 452) ausgebildet ist, Informationen über eine Datenübertragungsqualität von der ersten Netzwerkeinheit (151; 451) zu der zweiten Netzwerkeinheit (152; 452) zu bestimmen,
wobei die zweite Netzwerkeinheit (152; 452) ausgebildet ist, die Informationen über die Datenübertragungsqualität von der ersten Netzwerkeinheit (151; 451) zu der zweiten Netzwerkeinheit (152; 452) an die Vorrichtung (100; 400) zu übermitteln, indem die zweite Netzwerkeinheit (152; 452) eine Codierregel aus einer Gruppe von zwei oder mehr Codierregeln auswählt und die ersten Daten und/oder zweiten Daten und/oder eine Kombination der ersten Daten und der zweiten Daten in dem zweiten Datenpaket abhängig von der Kodierregel codiert und mit einem Prüfcode versieht, und
wobei die Vorrichtung (100; 400) ausgebildet ist, die Informationen über die Datenübertragungsqualität von der ersten Netzwerkeinheit (151; 451) zu der zweiten Netzwerkeinheit (152; 452) zu ermitteln, indem die Vorrichtung (100; 400) unter Verwendung des Prüfcodes, der in dem zweiten Datenpaket enthalten ist, die Codierregel der zwei oder mehr Codierregeln bestimmt, die von der zweiten Netzwerkeinheit (152; 452) ausgewählt wurde.

11. Vorrichtung (100; 400) nach einem der vorherigen Ansprüche,
wobei die zweite Netzwerkeinheit (152; 452) eingerichtet ist, die zweite Datenübertragung durchzuführen, indem die von der zweiten Netzwerkeinheit (152; 452) zu versendenden zweiten Daten so übertragen werden, dass die zweiten Daten mit den ersten Daten als das zweite Datenpaket durch Superposition kombiniert sind.

12. Vorrichtung (100; 400) nach einem der vorherigen Ansprüche,
wobei die zweite Netzwerkeinheit (152; 452) eingerichtet ist, die zweite Datenübertragung durchzuführen, indem die von der zweiten Netzwerkeinheit (152; 452) zu versendenden zweiten Daten so übertragen werden, dass die zweiten Daten mit den ersten Daten in dem zweiten Datenpaket XOR-verknüpft sind, oder dass die zweiten Daten durch eine gewichtete Addition mit den ersten Daten kombiniert sind, oder dass die zweiten Daten durch eine Superposition in einem Galoisfeld mit den ersten Daten kombiniert sind.

13. Vorrichtung (100; 400) nach einem der vorherigen Ansprüche,
wobei die zweite Netzwerkeinheit (152; 452) eingerichtet ist, die ersten Daten, die mit einem ersten Codier-Koeffizienten kombiniert sind, mit den zweiten Daten, die mit einem zweiten Codier-Koeffizienten kombiniert sind, in dem zweiten Datenpaket zu kombinieren.

14. Vorrichtung (100; 400) nach Anspruch 13,
wobei die zweite Netzwerkeinheit (152; 452) eingerichtet ist, die ersten Daten, die mit einem ersten Codier-Koeffizienten multipliziert sind, mit den zweiten Daten, die mit einem zweiten Codier-Koeffizienten multipliziert sind, in dem zweiten Datenpaket XOR-zu-verknüpfen.

15. Vorrichtung (100; 400) nach einem der vorherigen Ansprüche,
wobei das Kommunikationsnetzwerk ein drahtloses Kommunikationsnetzwerk ist,
wobei die erste Netzwerkeinheit (151; 451) eine erste drahtlose Netzwerkeinheit ist,
wobei die zweite Netzwerkeinheit (152; 452) eine zweite drahtlose Netzwerkeinheit ist,
wobei die Empfangseinheit (110) der Vorrichtung (100; 400) eine Empfangseinheit (110) zum Empfang von drahtlosen Datenübertragungen ist.

16. Basisstation eines drahtlosen Kommunikationsnetzwerkes,
wobei die Basisstation eine Vorrichtung (100; 400) nach Anspruch 15 umfasst.

17. Kommunikationsnetzwerk, umfassend:

eine erste Netzwerkeinheit (151; 451),
eine zweite Netzwerkeinheit (152; 452) und
eine Vorrichtung (100; 400) nach einem der vorherigen Ansprüche zu einer Bestimmung einer Übertragungsqualität in einem Kommunikationsnetzwerk,
wobei die erste Netzwerkeinheit (151; 451) eingerichtet ist, eine erste Datenübertragung durchzuführen, indem von der ersten Netzwerkeinheit (151; 451) zu versendende erste Daten so übertragen werden, dass ein erstes Datenpaket von den ersten Daten abhängt,

wobei die zweite Netzwerkeinheit (152; 452) eingerichtet ist, eine zweite Datenübertragung durchzuführen, indem von der zweiten Netzwerkeinheit (152; 452) zu versendende zweite Daten so übertragen werden, dass die zweiten Daten mit den ersten Daten in einem zweiten Datenpaket kombiniert sind, wobei die Vorrichtung (100; 400) eine Empfangseinheit (110) umfasst, die ausgebildet ist, die zweite Datenübertragung zu empfangen, und wobei die Vorrichtung (100; 400) eine Auswerteeinheit (120) umfasst, die ausgebildet ist, eine erste Qualität der ersten Datenübertragung und/oder eine zweite Qualität der zweiten Datenübertragung zu bestimmen, indem die Auswerteeinheit (120) das zweite Datenpaket auswertet.

18. Kommunikationsnetzwerk nach Anspruch 17, wobei das Kommunikationsnetzwerk ein drahtloses Kommunikationsnetzwerk ist, wobei die erste Netzwerkeinheit (151; 451) eine erste drahtlose Netzwerkeinheit ist, wobei die zweite Netzwerkeinheit (152; 452) eine zweite drahtlose Netzwerkeinheit ist, wobei die Empfangseinheit (110) der Vorrichtung (100; 400) eine Empfangseinheit (110) zum Empfang von drahtlosen Datenübertragungen ist.

19. Verfahren zu einer Bestimmung einer Übertragungsqualität in einem Kom munikationsnetzwerk, wobei eine erste Netzwerkeinheit (151; 451) des Kommunikationsnetzwerks eine erste Datenübertragung durchzuführt, indem von der ersten Netzwerkeinheit (151; 451) zu versendende erste Daten so übertragen werden, dass ein erstes Datenpaket von den ersten Daten abhängt, wobei eine zweite Netzwerkeinheit (152; 452) des Kommunikationsnetzwerks eine zweite Datenübertragung durchzuführt, indem von der zweiten Netzwerkeinheit (152; 452) zu versendende zweite Daten so übertragen werden, dass die zweiten Daten mit den ersten Daten in einem zweiten Datenpaket kombiniert sind, wobei die Vorrichtung (100; 400) eine Empfangseinheit (110) umfasst, die die zweite Datenübertragung empfängt, und wobei die Vorrichtung (100; 400) eine Auswerteeinheit (120) umfasst, die eine erste Qualität der ersten Datenübertragung und/oder eine zweite Qualität der zweiten Datenübertragung bestimmt, indem die Auswerteeinheit (120) das zweite Datenpaket auswertet.

20. Computerprogramm mit einem Programmcode zur Durchführung des Verfahrens nach Anspruch 19.

100

Vorrichtung zu einer Bestimmung einer Übertragungsqualität

Empfangseinheit

Auswerteeinheit

110

120

151

152

153

erste Netzwerkeinheit

zweite Netzwerkeinheit

dritte Netzwerkeinheit

Fig. 1

Fig. 2

network coded symbols

| $S_1 \rightarrow C$ | $S_2 \rightarrow C$ | $\cdots$ | $S_M \rightarrow C$ | $R_1 \rightarrow D$ | $R_2 \rightarrow D$ | $\cdots$ | $R_N \rightarrow D$ |

$b_{R_1}$     $b_{R_2}$     $b_{R_N}$

321     322     323

## Fig. 3

EP 4 080 798 A1

| | |
|---|---|
| ←——→ | Uplink / Downlink |
| ←- - -→ | Side Link |

451
Funkknoten N$_1$

Basisstation BS
400

Funkknoten N$_2$
452

Fig. 4

Fig. 5

EP 4 080 798 A1

Symbollänge g Bit

Source-Datenpaket von NID1 für NID2

| D | A | T | A | 1 |

x x x x x

Codierkoeffizienten 1

| $C_1$ | $C_1$ | $C_1$ | $C_1$ | $C_1$ |

+ + + + +

Source-Datenpaket von NID1 für NID7

| D | A | T | A | 2 |

x x x x x

Codierkoeffizienten 2

| $C_2$ | $C_2$ | $C_2$ | $C_2$ | $C_2$ |

| NID1->2 | $C_1$ | NID1->7 | $C_2$ | kodierte Daten |

Header h Bit

Fig. 6

| Slot | 0 | 1 | 2 | 3 | 4 | 5 | 6 |
|------|---|---|---|---|---|---|---|
| BS | A | B | A+B | Rx | Rx | Rx | Rx |
| $N_1$ | Rx | Rx | Rx | B+a | Rx | b+a | Rx |
| $N_2$ | Rx | Rx | Rx | Rx | A+b | Rx | b+a |

Fig. 7

EP 4 080 798 A1

451

Funkknoten N₁

Uplink / Downlink

Side Link

Basisstation BS

400

Funkknoten N₂

452

Funkknoten N₃

453

Fig. 8

EP 4 080 798 A1

| Slot | 0 | 1 | 2 | 3 | 4 | 5 | 6 | 7 | 8 | 9 |
|---|---|---|---|---|---|---|---|---|---|---|
| BS | A | B | C | A+B+C | Rx | Rx | Rx | Rx | Rx | Rx |
| $N_1$ | Rx | Rx | Rx | Rx | B+2C+a | Rx | Rx | 2B+C+a+2b | Rx | Rx |
| $N_2$ | Rx | Rx | Rx | Rx | Rx | 2A+C+b | Rx | Rx | A+2C+b+2c | Rx |
| $N_3$ | Rx | Rx | Rx | Rx | Rx | Rx | A+2B+c | Rx | Rx | 2A+B+2a+c |

Fig. 9

EP 4 080 798 A1

**Europäisches Patentamt**
**European Patent Office**
**Office européen des brevets**

# EUROPÄISCHER RECHERCHENBERICHT

**Nummer der Anmeldung**

EP 21 17 0130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2019/394654 A1 (GARDNER DANIEL [US]) 26. Dezember 2019 (2019-12-26)<br>* Absätze [0087] - [0092]; Abbildung 1D *<br>* Absätze [0133] - [0136] *<br>* Absätze [0148] - [0160]; Abbildungen 6,7 *<br><br>----- | 1,2,5,9, 11-20<br>3,4,6-8, 10 | INV.<br>H04L1/00<br>H04L1/20 |
| X<br><br><br>A | BORKOTOKY SIDDHARTHA S ET AL: "Some results on two forms of erasure-correction coding for packet radio networks", 2015 INFORMATION THEORY AND APPLICATIONS WORKSHOP (ITA), IEEE, 1. Februar 2015 (2015-02-01), Seiten 265-269, XP032799778, DOI: 10.1109/ITA.2015.7308999 [gefunden am 2015-10-27]<br>* Sections I-V *<br><br>----- | 1,19,20<br><br><br>2-18 | |
| A | WO 2016/050926 A1 (KONINKL KPN NV [NL]; TNO [NL]; UNIV TWENTE [NL]) 7. April 2016 (2016-04-07)<br>* Seite 11, Zeile 33 - Seite 15, Zeile 25; Abbildungen 4-6 *<br><br>----- | 1-20 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 6. Oktober 2021 | Kreppel, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 0130

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2021

| Im Recherchenbericht angeführtes Patentdokument | Datum der Veröffentlichung | Mitglied(er) der Patentfamilie | Datum der Veröffentlichung |
|---|---|---|---|
| US 2019394654 A1 | 26-12-2019 | KEINE | |
| WO 2016050926 A1 | 07-04-2016 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014159616 A2
- WO 2014159616 A3
- US 8842599 B2
- US 20140222996 A1
- US 20140036696 A1